# EUROPEAN PATENT APPLICATION

(11) **EP 1 653 669 A1**
(43) Date of publication of application: **03.05.2006**
(21) Application number: 04737109.1
(22) Date of filing: 22.06.2004
(51) Int. Cl.: H04L 12/28, H04L 12/44

(54) **METHOD OF CONTROLLING OSI (ISO) LAYER-TWO LOOPS FOR TELECOMMUNICATION NETWORKS**

(30) Priority: 18.07.2003 ES 200301700
(71) Applicant: Diseno de Sistemas en Silicio S.A., 46980 Paterna (Valencia) (ES)
(72) Inventor: BLASCO CLARET, Jorge Vicente, E-46020 Valencia (ES); RIVEIRO INSUA, Juan Carlos, E-46019 Valencia (ES); TEN CEBRIAN, Andrea, E-46021 Valencia (ES)
(74) Representative: Ungria Lopez, Javier
(86) International application number: PCT/ES2004/000292
(87) International publication number: WO 2005/008963

(57) **Abstract**

It is **characterized by** the use of disabled links by a conventional protocol which avoids the existence of loops, for the sending of messages to a single user (unicast) of known destination. It permits the optimization of the efficiency of the network in terms of the traffic addressed to a single user among destinations connected via a medium. Moreover, the procedure of the invention also permits the objective to be conserved of any conventional loop elimination protocol applied on the system for multicast and broadcast traffic, which is the traffic that can generate flooding and other problems caused by loops, while it increases the efficiency among switches whose links have been disabled by the convention loop-elimination protocol for unicast traffic.

## Description

### OBJECT OF THE INVENTION

As stated in the title of this specification, the present invention refers to a method of controlling loops in layer 2 of OST (Open System Interconnection) of ISO (International Standards Organization) for telecommunication networks.

This procedure applies to communication networks functioning according Lo the OSI reference system of ISO and using loop control systems at level 2 such as, for example, those provided by the standard ANSI (American National Standards Institute) / IEEE (Institute of Electrical and Electronic Engineers) 802 1D.

The object of the invention is to increase the efficiency in the use of the physical medium, reduce latencies for traffic addressed to a user (unicast) and conserve the protection conventionally employed against loops which are produced in networks and which consists et protocols that ensure a loop-free topology.

### BACKGROUND TO THE INVENTION

In the majority of telecommunications systems the OST (Open System Interconnection) reference system of ISO (International Stamdaxds Organization) is used which possesses a level 2 data link which represents the processes acting directly on the physical medium for the transmission of data. The ANSI/IEEE Std 802.1D MAC (Medium Access Control) Bridges protocol provides a standard for level 2 protocols and defines a process of loop control at that level.

Telecommunications systems are normally designed with physical redundancy, which permits a fast reaction in the event of modifications or falls of links in the network without this implying loss of service. Unfortunately, this physical redundancy can provoke loops, in other words, paths between elements of level 2 that are closed. For traffic whose destination address is unknown, a level 2 router element usually replicates the information via all the available output ports, as revealed from protocol 802.1S. In a system with closed paths this can imply replicating the same information indefinitely to the point of saturating the physical medium and causing the information to travel indefinitely between switches that are not its destination. In order to prevent this, protocols are created such as the Spanning Tree protocol, also the 802-1D protocol and other similar procedures for generating a loop-free level 2 hierarchy and which are known in the state uf the art.

The Spanning Tree creates a unique path structure in the form of a tree in such a way that minimizes the cost of the paths towards the switch designated as the root. This protocol converts the real topology with loops into a loop free topology. To do this, it disables a series of loops among the switches so that there is a unique path for reaching a destination from a particular switch by rising and falling through the hierarchy. So, the objective of the Spanning Tree is to make the level 2 switches aware of a sub-set of the topology, in other words a tree, that is loop-free, but without losing connectivity, and adapt it to the physical changes of the topology. In order to obtain this, the level 2 switches send messages one to another in order to discover the topology. Other conventional protocols perform a similar process, disabling certain links and maintaining others enabled in order to achieve a loop-free topoLogy.

There exist many methods providing optimisations of the Spanning Tree protocol, such as the Kruskal algorithm or the Prim algorithm, but they focus on optimizing the tree structure in order to provide minimum paths or on optimizing Lhe convergence speed of the protocol, such as the fast Spanning Tree.

Nevertheless, the problem of the lack of efficiency in the use of the physical transmission medium for point to point traffic with known destination continues to exist. If, for example, between two switches with direct visibility the protocol breaks the link because it provokes loops, the traffic between those two switches must always use a much longer path than the one it would use if its link were not disabled. This is especially visible in systems with connections in the form of a ring. For specific structures in ring form there exists an optimization Called Ring Spanning Tree (defined by the company RiverStone Networks) but it does not solve the problem of the inefficiency.

The invention is based on the fact that during the processing of the traffic a sieparation can be made of that traffic which can pruvukc loops, which is the traffic which has to be replicated by all the ports, in other words, the traffic having multiple destinations (multicast) or unknown destination, from the processing of the traffic which never provokes loops, in other words, traffic going to a single known user (unicast). In this way, the unicast traffic of known destination follows the shortest path to its destination while the problematic traffic uses the loop free structure, which is less efficient.

This implies an increase in the efficiency of the use of the physical medium without excessively increasing the complexity. The procedure of the invention improves the use of the medium by getting the unicast traffic not to use unnecessary connections; it improves the efficiency of the transmission for that traffic since the path to follow is less and consequently it reduces latencies and losses, furthermore conserving protection against the problems associated with loops.

In this patent application, the connection, between a source switch and another destination switch refers to the capacity of the source switch being able to transmit traffic to the destindlion switch without it mattering whether this is done directly or via other switches. Also, the number of jumps refers to the nmmher of transmissions necessary so that a transmission arrives from the source switch to the destination switch. This value is equal to one (because of the initial transmission) plus the number of intermediate switches through which the message has to pass in order to arrive at the destination switch, in other words, if, in order to get from the source to the destination, an intermediate switch has to be passed through (one that is neither the source nor the destination of the traffic), the distance will be two jumps, if two intermediate switches have to be passed through the distance will be three jumps, and so on successively. If no intermediate switch has to be passed through, the source and destination switch are one jump apart, in other words they are neighbours or, putting this ditferently, they have direct visibility.

### DESCRIPTION OF THE INVENTION

In order to achieve the objectives and avoid the drawbacks stated in the above sections, the invention consists of a loop cocilcol procedure in level 2 of OSI (ISO) for telecommunications networks in which traffic is sent to a single user (unicast), to multiple users (multicast) and to all users (broadcast), in which topologies with loops are also produced, for which the IEEE Spanning Tree protocol 802.ID is applied in that network, or other procedure known in the state of the art which disables links in order to ensure the existence of a loop free topology in networks containing bridges (level 2 switches) in parallel. Also, in that network the different users are connected by means of links, where said links are one-way connections defined at source and with different channel codings.

The procedure is primarily characterized in that it comprises the use of links disabled by the conventional protocol which guarantees a loop-free topology for making transmissions of unicast traffic of known destination, while multicast, broadcast and unicast traffic of unknown destination continues being transmitted via the links enabled by the conventional protocol which ensures loop-free topology.

Thanks to this, the loops and saturation of the network are avoided and transmissions are achieved with greater efficiency in time and use of channel for unicast traffic of known destination.

Another characteristic of the procedure consists of enabling the links disabled by the conventional protocol, in other words, outside the loop-free topology, in point to point links when the transmission is unicast and the destination of the transmission is known and achievable in a smaller number of jumps by using the enabled link in comparison with the number of jumps necessary when using the loop-free topology, in such a way that the number of jumps needed in the transmissions between switches is reduced.

The procedure provides that, when a switch receives a packet via a link from one address and said switch has to learn that address in order to be able to carry out the protocol ensuring the loop-free topology, the switch notifies all the neighbouring switches, both via the links enabled by the conventional protocol ensuring a loop free topology and via the disabled links which can reach the learned address via that switch, in such way that the notification only reaches the neighbouring switches with direct visibility, thus optimizing the route.

Moreover, the procedure modifies the filtering table, indicating which links have been disabled, of the conventional protocol which guarantees a loop-free topology when a switch receives a notification that includes the optimized route to a given address via the switch which transmitted the notification, and this optimized route is made to prevail 1 over those learned by the original switching protocol. With this, the optimum routes among neighbouring switches to a given destination are learned.

Also, the procedure considers the implementation of different loop free topologies using multiple lists of active links in each switch depending on the type of traffic transmitted by that switch, with this traffic being unicast, multicast, broadcast or traffic of unknown destination, for which a range of conventional protocols are used guaranteeing loop free topologies.

The primary objective of this procedure is to make sure that the shortest possible path is selected for the transmission of traffic to a user (unicast), thereby maximizing the efficiency and use of the medium, while for traffic to multiple users (multicast) or of unknown destination there do not exist any loops. By these means, the loops and saturation of the network are avoided, maintaining the possibility of sending to multiple users.

Below, in order to facilitate a better understanding of this specification and forming an integral part thereof, some figures are included in which the object of the invention has been represented in a manner that is illustrative rather than limiting.

### BRIEF DESCRIPTION OF THE FIGURES

Figure 1. Represents an example of a network with physical redundancy and loops.
Figure 2.- Represents the effect of the Spanning Tree protocol on the network of figure 1.
Figure 3.- Represents the lack of efficiency on a network in the form of a tree in which the Spanning Tree network is applied.
Figure 4.- Example of a diagram for effecting the procedure of the invention on a level 2 switch.
Figure 5.- Represents the optimization carried out by the procedure of the invention.
Figure 6.- Represents the implementation of a first step of the process of the invention.
Figure 7. Represents the implementation of a second step of the process of the invention.
Figure 8.- Represents the implementation of a third step of the process of the invention.
Figure 9. Represents the implementation of a fourth step of the process of the invention.

### DESCRIPTION OF AN EMBODIMENT OF THE INVENTION

Given below is a description of an example of the invention, making reference to the numbering adopted in the figures.

In these examples of embodiment, the procedure of the invention is used in a communications system whose transmission medium is the electricity line. As in all multipoint systems, the system forming the subject of the example is liable to the occurrence of loops, as was described in the section on background of the invention when all the switches have direct visibility, the traffic to a known user (unicast) does not generate any problems (unless any element of level 2 does not know how to route it and propagates it by flooding as indicated in protocol 802.1D), but the traffic towards multiple users (multicast) can remain indefinitely going round in a closed loop and multiplying itself.

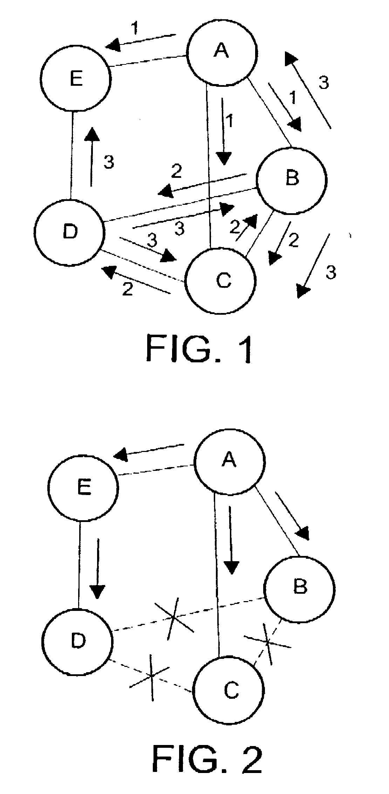

Figure 1 represents the effect of the loops. In this figure, A, B, C, D and E represent level 2 elements and the lines are the links among them. The arrows represent the path of a point to multipoint data stream from A to an unknown destination or a multiplicity of destinations, in which the effect which flooding can have cause in the network can be appreciated. In this example: A is trying to send a message to an unknown destination E and it sends it (1) via all its transmission links.

When this message reaches B and C, as the destination is unknown, they both send (2) the message via all their output links (with the exception of the link via which the message arrived), generating a second group of messages. At this moment, both B and C have again received the message and D receives the message for the first time. The arrows marked with a (3) are some of those that would be generated in a third hatch. The packet remains going backwards and forwards between B, C and D, becoming multiplied in each switch and, as well as producing duplicates in the destination E, the network becomes indefinitely saturated.

In order to prevent this type of situation a protocol has to be implemented that will disable the redundant paths causing loops, but which is sufficiently dynamic for changing the configuration in the event ot a change in the network (a link that falls, a switch that falls, etc.). Tn this particular example of embodiment, the Spanning Tree protocol is used for creating a unique path structure in the multipoint networks in the form of a tree in such a way that minimizes the cost of the paths towards the switch designated as the root. This protocol becomes the real topology with loops in a loop free topology. In order to achieve this, it disables certain links between switches so that there is a unique path for achieving a destination from a certain switch by rising and falling through the hierarchy. Figure 2 represents the effect of the Spanning Tree; where A, B, C, D and E represent the same network elements as in figure 1. The crosses represent the links which the Spanning Tree protocol invalidates, so that there exists just one possible path from switch A (level 2 element) which the protocol designates as root, to any other switch in the network

So, the objective of the Spanning Tree is to make the level 2 switches aware of a sub-set of the topology (a tree), that is loop-free, but without losing connectivity, and adapt it to the physical changes of the topology. In order to obtain this, the level 2 elements send messages from one to another in order to discover the topology, where these messages receive the name of configuration BPDUs (Bridge Protocol Data Units). With these messages, the loops in the topology can be detected and the links disabled until the topology becomes loop-free.

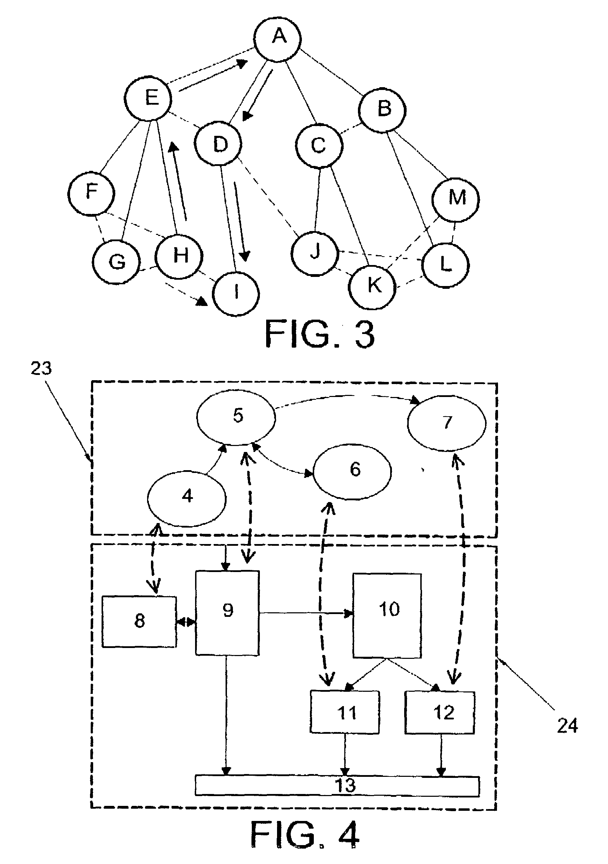

The problem consists of the fact that, in a tree type system such as that of figure 3, after using the protocol preventing loops, a great deal of efficiency is lost in the communication between neighbouring switches connected by a direct link, in other words, with direct visibility. So, figure 3 exemplifies the disadvantage implied by applying the Spanning Tree protocol in very hierarchized networks. In that figure the continuous lines represent links, the discontinuous lines represent links disabled by the Spanning Tree and the elements from A to M are level 2 switches. Under these conditions, in order to establish a data stream between the switches H and I the traffic needs to make four jumps, while one connection would be sufficient if the protocol had not disabled the direct link joining II and I (discontinuous arrow). In other words, in order to communicate H with I, even though these switches have direct origin at source, the traffic has to be routed towards the root switch A and go back down through the hierarchy, something which would be a matter of a single jump if the direct vision were conserved.

Therefore, for unicast traffic, once the addresses have been learned by the level 2 element, efficiency is lost in certain situations.

The solution proposed in this invention is based on the fact that if every level 2 element in the network for every input packet can determine a single output link, guaranteeing that the destination can be reached via that link after one or various jumps, and that via that link it is closer to the destination, said level 2 element can use any link without the loops being a problem. It is evident that if the packet is never duplicated, and in each connection it is closer to the destination, then the packet will arrive at that destination without occasioning any problems. In other words, in a situation of complete learning, and after guaranteeing that the learning process is the correct onc, unicast traffic can travel via a network with loops without becoming duplicated in the destination nor without saturating the network.

So, if a learning process is achieved which guarantees that the link to an address is approaching the packets transmitted by the link towards that destination address (something which may not occur since, due to having a topology with loops, it could happen that the packet is travelling in circles and never reaches its destination), the unicast traffic whose destination address is known to the level 2 elements will be able to be transmitted via a topology with loops without any problem.

The level 2 switch system in the proposed example deals in an internally differentiated way with unicast traffic of known destination (learned) and multicast traffic or unicast with unknown destination.

The switching protocol applied in the switch specifies that there exists a filtering table permitting the learning of addresses to another user. When the level 2 address to another user of a certain packet is found in this table, the packet positions itself directly in the appropriate output queue. But if the address is not found in the table, in other words, it is an address to multiple users, the packet is replicated by the appropriate interfaces.

The procedure of the invention proposes a modification of the loop control protocol (Spanning Tree in this example) which consists of four elements (represented in the upper discontinuous square in figure 4), where the upper discontinuous square (23) contains high level processes while the lower square (24) contains low level ones. In general, the high level processes are executed on the low level ones. The process marked as (4) is the direct path optimization process. This process acts on the process (8), which is the address search and leaning process of level 2 (in accordance with the protocol 802.1D). (5) is the port control process, and acts on (9), which is Lhe point to point traffic control process, thanks to the information supplied to it hy (4), (6) and (7). Process (6) is the point to multipoint group management process. Said process acts on the multicast traffic control represented by (10) in its aspect of point to multipoint groups (11). Process (7) is the moditied Spanning Tree process, which also acts on (10) in its aspect of generic point to multipoint traffic control (12). The object (13) represents the output of generic packets.

The objective of the system is to apply the Spanning Tree algorithm to the configurations and links handling multicast traffic in such a way that this traffic is affected by the changes but the unicast traffic of known destination is not. A port control process (5) decides which links are broken or not for the transmissions depending on what the Spanning Tree process (7) tells it and a new direct path optimization process (4) decides which links can be used for unicast transmission with known destination, since the Spanning Tree ('/) will only include in the tables of the process (10) the ports of the links which arc not going to generate loops. The multipoint group management (11) is independent and is updated with the changes carried out by the port control process (5).

The direct path optimization process affects the learning (also known as filtering), in other words, it causes the filtering tables of the switches to include the direct way of arriving at a destination switch. In this example of embodiment, this optimization is only carried out tor optimizations among neighbours (one jump switches), in other words, when the external destination (outside the electrical network) is attainable from a neighbouring switch in one jump.

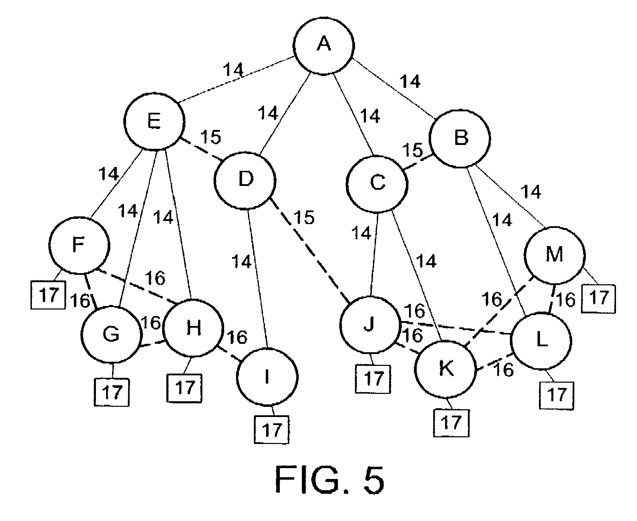

In this example of embodiment, the optimizations are only made in order to reach different segments (outside the electrical network) and between neighbouring switches. For example, figure 5 is the result of the process of the invention, where the circuits of A to M represent level 2 switching elements and the squares (17) represent network segments with different destinations among them. The continuous lines marked with (14) represent the enabled links, while the discontinuous lines marked with (15) represent links which have been eliminated from the hierarchy by the Spanning Tree protocol. The discontinuous lines marked with (16) are the links broken by the Spanning Tree but optimized for unicast traffic. In other words, if the switch H receives traffic destined for the destination network segment (17) hanging from switch I, switch H will optimize the route as far as I. But if F (which has no direct vision with I though it does with H) receives traffic towards switch I (which in this example of embodiment switches towards a local area network, LAN), F does not optimize the route passing through H in order to arrive at I (two jumps); however, what it will optimize is the route towards the destination network (17), hanging from H. In this case, the switches F, G, H, I, J, K, L and M are connected directly with the addresses of the destination network segments (17) hanging from them.

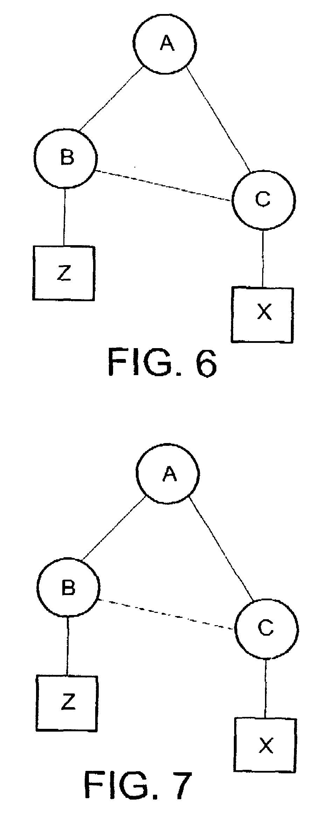

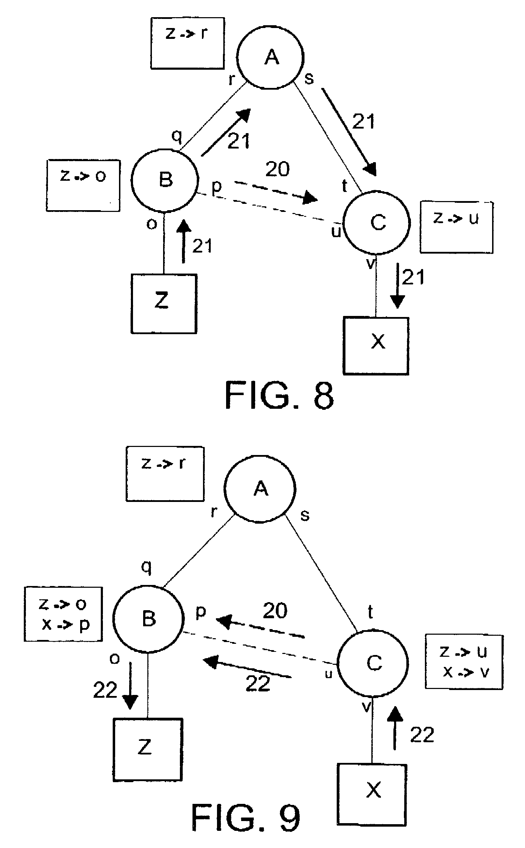

Figures 6, 7, 8 and 9 represent the step by step optimization process for a given link in another example of embodiment. Figure 6 represents the original state where there arc three level 2 switches, A, B and C, two destination stations Z and X, and links between all the switches. Represented in figure 7 is the hierarchy provided by the Spanning Tree, which breaks the link between B and C. In figure 8, the station Z sends a message to station X, which has the identifier (21). When the message arrives at B, this switch learns how to arrive at Z, with which it sends a notification (20) to C which containing the way of arriving at Z. C introduces this input into its routing table. In this figure, the links from the point of view of each switch are represented with the letters o, p, q, r, s, t, u and v. The filtering tables are represented in a square alongside each switch. In this example of embodiment, the filtering tables associate destination with transmission link (output link). In figure 9, x replies to Z, with this message (22) travelling via the optimized link. Moreover, switch C performs a similar process with respect to X and it sends a notification (20) to B with the manner of reaching X, in such a way that both links are optimized for the sending of unicast traffic with known destination.

Also, the notification packets (20) go from one switch to its neighbour. They do not propagate through Lhe network, in such a way that the optimizations become just one jump.

In the stationary state, in other words, after carrying out the process for all the contact addresses and switches, the switches know how to send unicast traffic with known address in an optimized way while multicast or unicast traffic with unknown destination follows the tree established by the Spanning Tree.

The notification packets (20) are only generated when a switch learns a new address and they are only propagated in one jump, with which the extra load for the network is minimal.

## Claims

1. **METHOD OF CONTROLLING OSI (ISO) LAYER-TWO LOOPS FOR TELECOMMUNICATION NETWORKS** which comprises traffic towards a single user (unicast), towards multiple users (multicast) and towards all users (broadcast), in which topologies with loops are also produced, for which a protocol is applied selected among the Spanning Tree according to IEEE standard 802.1D and any other conventional procedure for disabling links and ensuring the existence of a loop free topology in networks containing bridges (level 2 switches) in parallel, and where the different users are connected by means of links, where said links are one-way connections defined at source and with different channel codings; **characterized in that** it comprises the use of links disabled by the conventional protocol which guarantees a loop-free topology in transmissions of unicast traffic of known destination; while in multicast, broadcast and unicast traffic of unknown destination it comprises the use of links enabled by the conventional protocol which ensures loop-free topology; in order to avoid loops, saturation of the network and to achieve transmissions with greater efficiency in time and use of the channel in unicast traffic of known destination.

2. **METHOD OF CONTROLLING OSI (ISO) LAYER-TWO LOOPS FOR TELECOMMUNICATION NETWORKS** according to claim 1, **characterized in that** it comprises enabling links disabled by the conventional procedure, in other words, outside the loop-free topology, in point to point links of unicast transmission and with known destination of the transmission, when the number ot jumps is less using the enabled link in comparison with the number of jumps necessary when using loop-free topology.

3. **METHOD OF CONTROLLING OSI (ISO) LAYER-TWO LOOPS FOR TELECOMMUNICATION NETWORKS** according to claim 2, **characterized in that** when a switch receives a packet via a link from an address and when said switch has to learn that address in order to be able to carry out the conventional protocol ensuring a loop tree topology, it comprises notification by the switch to all the neighbouring switches, both via the links enabled by the conventional protocol ensuring a loop-free topology and via the disabled links which can reach the learned address via that switch, so that said notification will only reach the neighbouring switches with direct visibility and the route is optimized.

4. **METHOD OF CONTROLLING OSI (ISO) LAYER-TWO LOOPS FOR TELECOMMUNICATION NETWORKS** according to claim 3, **characterized in that** iL comprises modifying the filtering table, indicating which links have been disabled, of the conventional protocol which guarantees a loop-free topology when a switch receives a notification that includes the optimized route to a given address via the switch which transmitted the notification, and making said optimized route prevail over those learned by the original switching protocol, in order to learn the optimum routes among neighbouring switches to a given destination.

5. **METHOD OF CONTROLLING OSI (ISO) LAYER-TWO LOOPS FOR TELECOMMUNICATION NETWORKS** according to claim 1, **characterized in that** it comprises implementing different loop-free topologies using a plurality of conventional protocols guaranteeing loop free topologies, by means of multiple lists of active links in each switch depending on the type of traffic transmitted by that switch, with this being selected from among unicast, multicast, broadcast and traffic of unknown destination.
